# EUROPÄISCHE PATENTSCHRIFT

(11) **EP 2 692 602 B1**
(45) Veröffentlichungstag und Bekanntmachung des Hinweises auf die Patenterteilung: **06.09.2017**
(21) Anmeldenummer: 13177679.1
(22) Anmeldetag: 23.07.2013
(51) Int. Cl.: B60T 17/04, F16L 37/00

(54) **Kupplungskopf eines Druckluftbremssystems mit einer Gummidichtung und einem in der Gummidichtung befindlichen Versteifungsteil**
Coupling head of a compressed air braking system with a rubber seal, and a reinforcement member located in the rubber seal
Tête d'accouplement d'un système de freinage pneumatique dotée d'un joint en caoutchouc et d'une armature située dans le joint en caoutchouc

(30) Priorität: 03.08.2012 DE 102012015380
(43) Veröffentlichungstag der Anmeldung: 05.02.2014
(73) Patentinhaber: KNORR-BREMSE Systeme für Nutzfahrzeuge GmbH, 80809 München (DE)
(72) Erfinder: Dali, Istvan, 6000 Kecskemét (HU); Sovago, Szabolcs, 6000 Kecskemét (HU); Pahl, Stefan, 82256 Fürstenfeldbruck (DE); Papp, Lajos, 6100 Kiskunfélegyháza (HU); Farkas, Gabor, 6000 Kecskemét (HU); Koncz, Laszlo, 6000 Kecskemét (HU)

(56) Entgegenhaltungen:
- EP-A1- 0 751 330
- DE-C2- 4 016 124
- US-A- 1 832 435

## Beschreibung

### GEBIET DER ERFINDUNG

Die vorliegende Erfindung betrifft einen Kupplungskopf nach dem Oberbegriff des unabhängigen Anspruchs 1. Ein solcher Kupplungskopf ist aus US 1832435 A bekannt. Das Einsatzgebiet der vorliegenden Erfindung erstreckt sich auf Kupplungsköpfe in Druckluftbremssystemen von Nutzfahrzeugen, die zwischen dem Bremssystem des Zugfahrzeuges und dem Bremssystem des Anhängers eine pneumatische Verbindung herstellen.

### Hintergrund der Erfindung

Aus der DE 44 14 954 A1 geht ein Dichtungsring für eine Rohrverbindung hervor, wobei ein Versteifungsring aus Metall im Dichtungsring angeordnet ist. Der Versteifungsring erstreckt sich über den gesamten Umfang des Dichtungsrings und ist am Innenumfang des Dichtungsrings angeordnet. Darüber hinaus ist der Dichtungsring mit elastischen Vorsprüngen versehen, die in radialer Richtung über die Umfangsfläche des Dichtungsrings hinausragen. Zum Aneinanderfügen von zwei Rohren wird in einer am Ende eines der zwei Rohre eingedrehte Dichtungsnut der Dichtungsring eingesetzt, der dank den daran gebildeten Vorsprüngen und dem Versteifungsring zuverlässig und passgenau an seinem Platz sitzt. Die Vorsprünge werden gegen eine zylindrische Fläche der Dichtungsnut angesetzt und durch die Einwirkung des Versteifungsrings eingepresst. Die Enden der Rohre werden mittels eines um die Rohre angepassten Befestigungsflansche und deren Spannbolzen gegeneinander gepresst, wobei die Dichtung in eine Axialrichtung des Rohres eingepresst wird und eine dichte Fugenfläche bildet.

Aus der DE 40 16 124 C2 geht eine Rohrverbindung mit einer Verbindungseinrichtung, die an den Enden zweier aneinander stoßender Rohre angreift, und eine Ringdichtung hervor. Die Ringdichtung weist einen gezahnten äußeren Umfangsabschnitt auf, um dem Entfernen der Ringdichtung aus einer Ausnehmung entgegen zu wirken, wenn die beiden Rohre voneinander getrennt werden. Der gezahnte äußere Umfangsabschnitt der Ringdichtung hat einen Durchmesser, der größer ist als der Innendurchmesser der Ausnehmung, so dass der gezahnte äußere Umfangsabschnitt zwangsweise gegen die Innenfläche der Ausnehmung gedrückt wird, um die Ringdichtung darin festzuhalten.

Aus dem allgemeinen bekannten Stand der Technik ist zudem bekannt, dass die pneumatische Dichtigkeit zwischen dem Zugmaschinenkupplungskopf und dem Anhängerkupplungskopf durch eine Gummidichtung erfüllt wird. Zusätzlich wird ein O-Ring benötigt, um die Gummidichtung an den Ventilsitz zu drücken. Darüber hinaus sichert eine oberhalb der Gummidichtung am Eingang des Kupplungskopfes angeschraubte Unterplatte die Gummidichtung zusätzlich vor einem Lösen aus dem Kolben. Um die Gummidichtung zu wechseln muss jedoch das gesamte Ventil auseinander gebaut werden, wobei es beim Zusammenbauen zu Beschädigungen des O-Ringes und der neuen Dichtung, aufgrund der schlechten Handhabbarkeit kommt. Bei einer unzureichender Fixierung der Dichtung durch den O-Ring, treten Undichtigkeiten auf, wodurch ein Eindringen von Fremdkörper wie Sand und Staub die Funktion und Lebensdauer der Bremsanlage beeinträchtigen.

### OFFENBARUNG DER ERFINDUNG

Ausgehend von dem vorgehend genannten Stand der Technik ist es die Aufgabe der vorliegenden Erfindung, bei einem Kupplungskopf eines Druckluftbremssystems eine leicht zu wechselnde Dichtung zu schaffen, die über die Dichtfähigkeit hinaus vor dem Eindringen von Fremdkörper in die Bremsanlage schützt.

Die Aufgabe wird ausgehend von einem Kupplungskopf gemäß dem Oberbegriff von Anspruch 1 in Verbindung mit dessen kennzeichnenden Merkmalen gelöst. Vorteilhafte Weiterbildungen der Erfindung gehen aus den nachfolgenden abhängigen Ansprüchen hervor.

Erfindungsgemäß ist die Gummidichtung des Kupplungskopfes zylinderförmig ausgebildet und zusammen mit dem zylinderförmig ausgebildeten Versteifungsteil innerhalb des Kolbens angeordnet, welcher ringförmige, sägezahnartige Vertiefungen aufweist, um über einen Kontakt der ringförmigen Ausprägungen mit dem Innenumfang des Kolbens die Druckluftleitung abzudichten und die Gummidichtung zu fixieren.

Eine zylinderförmige Dichtung bietet den Vorteil einer großen Dichtungsfläche, die aufgrund der Mantelinnenfläch gegeben ist. Das Gummi ist ein Werkstoff aus der Gruppe der Elastomere und weist aufgrund seiner elastischen Eigenschaften eine gute Anpassungsfähigkeit an abzudichtende Oberflächen auf. Durch das vorzugsweise aus Plastik bauende Versteifungsteil wird die nötige Festigkeit und Steifigkeit aufgebracht, die nötig ist, um die Gummidichtung an die abzudichtende Oberfläche anzudrücken. Die ringförmigen, sägezahnartigen Vertiefungen des Kolbens wirken zusammen mit den ringförmigen Ausprägungen der Gummidichtung einem Lösen der Gummidichtung entgegen und fixieren sie somit zuverlässig im Kolben.

Vorzugsweise ist an einem von dem Kolben axial wegzeigenden oberen Ende der Gummidichtung, außerhalb des Kolbens eine Dichtungslippe an der Gummidichtung angeordnet. Aufgrund einer derartigen Anordnung der Dichtungslippe wird dem Eindringen von Fremdkörpern wie Staub- oder Sandkörner entgegengewirkt. Die Dichtungslippe bietet darüber hinaus eine zuverlässige Lösung Feuchtigkeit und Wassertropfen von der Dichtungsoberfläche fern zu halten.

Des Weiteren bevorzugt besteht die Dichtungslippe aus dem gleichen Material wie die Gummidichtung und zwischen einer tangential an der Außenumfangsfläche der Gummidichtung anliegenden, zu einer Längsachse des Kolbens parallelen Gerade und der Dichtungslippe, ist unterhalb der Dichtungslippe ein spitzer Winkel ausgebildet. Der Vorteil, dass die Dichtungslippe ebenfalls aus Gummi gebildet ist, ermöglicht eine einfache Herstellung der Gummidichtung. Durch den spitzen Winkel ist die Dichtungslippe kompakt ausgeführt, erfüllt jedoch trotzdem die Anforderung der Abdichtung der Dichtungsoberfläche, da Wassertropfen und Schmutzpartikel wie Regentropfen auf einem Regenschirm abgeführt werden.

Gemäß einer die Erfindung weiter verbessernden Maßnahme wird vorgeschlagen, dass mindestens eine ringförmige Ausprägung am Außenumfang der Gummidichtung in eine der sägezahnartigen Vertiefungen des Kolbens eindringt. Das Eindringen der mindestens einen ringförmigen Ausprägung in die sägezahnartigen Vertiefungen wirkt einem unbeabsichtigten Lösen der Dichtung aus dem Kolben entgegen.

Des Weiteren bevorzugt ist das Versteifungsteil an dem unteren Ende länger als die das Versteifungsteil umgebende Gummidichtung, wobei das Versteifungsteil mit dem unteren Ende am Kolben aufliegt. Dies verhindert eine Beschädigung der Dichtung durch Quetschungen bei einem zu tiefen Einführen in den Kolben. Ferner wird dadurch ein immer gleichbleibendes passgenaues Anliegen der Gummidichtung realisiert und somit auch eine optimale Position beim Abdichten.

Erfindungsgemäß weist das Versteifungsteil längs entlang des Innenumfangs mindestens eine linienförmige Ausprägung auf, wobei die mindestens eine linienförmige Ausprägung bis zu der radialen Ausprägung des Versteifungsteils ausgebildet ist und dort endet, so dass am Innenumfang des Versteifungsteils auf Höhe der radialen Ausprägung ein glatter Bereich entsteht. Die mindestens eine linienförmige Ausprägung bietet neben der zusätzlichen Versteifung des Versteifungsteils Schutz vor einem Verdrehen eines darin befindlichen, am Innenumfang des Versteifungsteils anliegenden, Verbindungsstücks. Der glatte Bereich am Innenumfang des Versteifungsteils ermöglicht das zugehörige, ebenfalls linienförmige Ausprägungen aufweisende, Verbindungsstück teilweise in das Versteifungsteil einzuführen, um es dann dementsprechend zu drehen und derart zu positionieren, dass es vollständig einführbar ist.

### KURZE BESCHREIBUNG DER ZEICHNUNGEN

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigen:
- Fig. 1: eine schematische Querschnittdarstellung eines Kupplungskopfes mit einem Kolben, umfassend eine zylindrische Gummidichtung an deren Innenumfang ein zylindrisches Versteifungsteil angeordnet ist, und
- Fig.2: eine vergrößerte perspektivische Darstellung der Gummidichtung samt Versteifungsteil von oben betrachtet.

### DETAILLIERTE BESCHREIBUNG EINER BEVORZUGTEN AUSFÜHRUNGSFORM

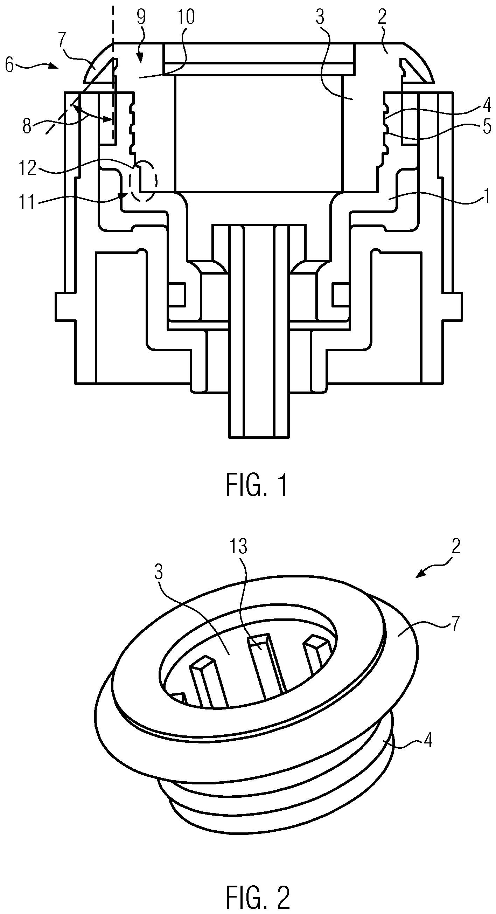

Gemäß Figur1 besteht ein Kupplungskopf eines Druckbremssystems aus einem Kolben 1, an dessen Außenumfang eine Gummidichtung 2 angeordnet ist. Innerhalb der Gummidichtung 2 ist ein Versteifungsteil 3 derart angeordnet, dass die Gummidichtung 2 an die Innenfläche des Kolbens 1 gedrückt wird und somit den Kolben abdichtet.

Die Gummidichtung 2 weist an einer Außenumfangsfläche ringförmige, radiale Ausprägungen 4 auf, die teilweise in sägezahnartige Vertiefungen 5 des Kolbens 1 eindringen. An einem oberen Ende 6 der Gummidichtung 2 ist in einem spitzen Winkel 8 eine Dichtungslippe 7 an der Gummidichtung 2 angeordnet, die Schmutz und Wasser ablenkt und von dem Eindringen in den Dichtungsraum abhält.

In einer am oberen Ende 6 der Gummidichtung 2 befindlichen Nut 9 ist eine radiale Ausprägung 10 des Versteifungsteils 3 angeordnet und wird somit von der Gummidichtung 2 umhüllt. An einem unteren Ende 11 ist am Innenumfang des Kolbens 1 eine glatte, Abdichtung begünstigende Innenumfangsfläche 12 angeordnet.

Die in der Figur 2 näher dargestellte Gummidichtung 2 veranschaulicht die Geometrie der Gummidichtung 2 und des darin befindlichen Versteifungsteils 3. An dem Außenumfang der Gummidichtung 2 sind die ringförmigen Ausprägungen 4 und die Dichtungslippe 7 angeordnet. Ferner sind an der Innenumfangsfläche des Versteifungsteils 3 linienförmige Ausprägungen 13 ausgebildet, die über eine Versteifung des Versteifungsteils 3 hinaus einem Verdrehen eines - hier nicht dargestellten - Verbindungsstücks entgegenwirken.
Die Erfindung ist nicht beschränkt auf das vorstehend beschriebene bevorzugte Ausführungsbeispiel. Es sind vielmehr auch Abwandlungen hiervon denkbar, welche vom Schutzbereich der nachfolgenden Ansprüche mit umfasst sind. So ist es beispielsweise auch möglich, anstelle sägezahnartiger Vertiefungen 5 im Kolben 1 rechteckige Vertiefungen aber auch halbkreisförmige Vertiefungen einzubringen.
Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste

- 1: Kolben
- 2: Gummidichtung
- 3: Versteifungsteil
- 4: ringförmigen Ausprägungen
- 5: sägezahnartige Vertiefungen
- 6: oberes Ende
- 7: Dichtungslippe
- 8: spitzer Winkel
- 9: Nut
- 10: radiale Ausprägung
- 11: unteres Ende
- 12: glatte Außenumfangsfläche
- 13: linienförmige Ausprägung

## Patentansprüche

1. Kupplungskopf für ein Druckluftbremssystem, mit einem zu einer Druckluftleitung gehörenden Kolben (1) und einer im Kolben angeordneten Gummidichtung (2), **dadurch gekennzeichnet, dass** an einem Innenumfang der Gummidichtung (2) ein sich über den gesamten Innenumfang erstreckendes Versteifungsteil (3) angeordnet ist, wobei die Gummidichtung (2) Ausprägungen (4) aufweist, die in radialer Richtung über die Außenumfangsfläche der Gummidichtung (2) hinaus ragen, wobei die Gummidichtung (2) zylinderförmig ausgebildet ist und zusammen mit dem zylinderförmig ausgebildeten Versteifungsteil (3) innerhalb des Kolbens (1), welcher ringförmige, sägezahnartige Vertiefungen (5) aufweist, angeordnet ist, um über einen Kontakt der ringförmigen Ausprägungen (4) mit dem Innenumfang des Kolbens (1) die Druckluftleitung abzudichten und die Gummidichtung (2) zu fixieren.

2. Kupplungskopf nach Anspruch 1,
**dadurch gekennzeichnet, dass** an einem von dem Kolben (1) axial wegzeigenden oberen Ende (6) der Gummidichtung (2), außerhalb des Kolbens (1) eine Dichtungslippe (7) an der Gummidichtung (2) angeordnet ist.

3. Kupplungskopf nach Anspruch 2,
**dadurch gekennzeichnet, dass** die Dichtungslippe (7) aus dem gleichen Material wie die Gummidichtung (2) besteht und zwischen einer tangential an der Außenumfangsfläche der Gummidichtung (2) anliegenden, zu einer Längsachse des Kolbens (1) parallelen Gerade und der Dichtungslippe (7), unterhalb der Dichtungslippe (7) ein spitzer Winkel (8) ausgebildet ist.

4. Kupplungskopf nach Anspruch 1,
**dadurch gekennzeichnet, dass** mindestens eine ringförmige Ausprägung (4) am Außenumfang der Gummidichtung (2) in eine der sägezahnartigen Vertiefungen (5) des Kolbens (1) eindringt.

5. Kupplungskopf nach einem der vorangehenden Ansprüche,
**dadurch gekennzeichnet, dass** das Versteifungsteil (3) an dem unteren Ende (11) länger ist als die das Versteifungsteil (3) umgebende Gummidichtung (2), wobei das Versteifungsteil (3) mit dem unteren Ende (11) am Kolben (1) aufliegt.

6. Kupplungskopf nach einem der vorangehenden Ansprüche,
**dadurch gekennzeichnet, dass** das Versteifungsteil (3) längs entlang des Innenumfangs mindestens eine linienförmige Ausprägung (13) aufweist, wobei die mindestens eine linienförmige Ausprägung (13) bis zu einer radialen Ausprägung (10) des Versteifungsteils (3) ausgebildet ist und dort endet, so dass am Innenumfang des Versteifungsteils (3) auf Höhe der radialen Ausprägung (10) ein glatter Bereich entsteht.

## Claims

1. Coupling head for a compressed air brake system, having a piston (1) which belongs to a compressed air line and having a rubber seal (2) which is arranged in the piston, **characterized in that** a reinforcing part (3) is arranged on an inner circumference of the rubber seal (2), which reinforcing part (3) extends over the entire inner circumference, the rubber seal (2) having embossments (4) which protrude beyond the outer circumferential face of the rubber seal (2) in the radial direction, the rubber seal (2) being of cylindrical configuration and being arranged, together with the reinforcing part (3) of cylindrical configuration, within the piston (1) which has annular, sawtooth-like depressions (5), in order to seal the compressed air line and to fix the rubber seal (2) via contact of the annular embossments (4) with the inner circumference of the piston (1).

2. Coupling head according to Claim 1, **characterized in that** a seal lip (7) is arranged on the rubber seal (2) outside the piston (1) at an upper end (6) of the rubber seal (2) which points axially away from the piston (1).

3. Coupling head according to Claim 2, **characterized in that** the seal lip (7) consists of the same material as the rubber seal (2), and an acute angle (8) is configured below the seal lip (7) between the seal lip (7) and a straight line which is parallel to a longitudinal axis of the piston (1) and bears tangentially against the outer circumferential face of the rubber seal (2).

4. Coupling head according to Claim 1, **characterized in that** at least one annular embossment (4) on the outer circumference of the rubber seal (2) penetrates into one of the sawtooth-like depressions (5) of the piston (1).

5. Coupling head according to one of the preceding claims, **characterized in that** the reinforcing part (3) is longer at the lower end (11) than the rubber seal (2) which surrounds the reinforcing part (3), the reinforcing part (3) lying with the lower end (11) on the piston (1).

6. Coupling head according to one of the preceding claims, **characterized in that** the reinforcing part (3) has at least one linear embossment (13) longitudinally along the inner circumference, the at least one linear embossment (13) being configured as far as a radial embossment (10) of the reinforcing part (3) and ending there, with the result that a smooth region is produced on the inner circumference of the reinforcing part (3) at the level of the radial embossment (10).

## Revendications

1. Tête d'accouplement pour un système de freinage à air comprimé, comprenant un piston (1) appartenant à un conduit pour de l'air comprimé et un joint (2) en caoutchouc monté dans le piston, **caractérisée en ce que**, sur un pourtour intérieur du joint (2) en caoutchouc, est montée une partie (3) de rigidification s'étendant sur tout le pourtour intérieur, le joint (2) en caoutchouc ayant des nervurages (4) qui dépassent, dans la direction radiale, de la surface périphérique extérieure du joint (2) en caoutchouc,
dans laquelle
le joint (2) en caoutchouc est constitué sous la forme d'un cylindre et, ensemble avec la partie (3) de rigidification constituée en forme de cylindre, est disposé à l'intérieur du piston (1), lequel a des creux (5) annulaires de type en dent de scie, pour rendre étanché le conduit pour de l'air comprimé, par un contact des nervurages (4) annulaires avec le pourtour intérieur du piston (1) et immobiliser le joint (2) en caoutchouc.

2. Tête d'accouplement suivant la revendication 1,
**caractérisée en ce qu'**à une extrémité (6), supérieure s'éloignant axialement du piston (1), du joint (2) en caoutchouc, à l'extérieur du piston (1), une lèvre (7) d'étanchéité est disposée sur le joint (2) en caoutchouc.

3. Tête d'accouplement suivant la revendication 2,
**caractérisée en ce que** la lèvre (7) d'étanchéité est en la même matière que le joint (2) en caoutchouc et, entre une droite s'appliquant tangentiellement à la surface périphérique extérieure du joint (2) en caoutchouc et parallèle à l'axe longitudinal du piston (1) et la lèvre (7) d'étanchéité, il est formé, en dessous de la lèvre (7) d'étanchéité, un angle (8) aigu.

4. Tête d'accouplement suivant la revendication 1,
**caractérisée en ce qu'**au moins un nervurage (4) annulaire, sur le pourtour extérieur du joint (2) en caoutchouc, pénètre dans l'un des creux (5) de type en dent de scie du piston (1).

5. Tête d'accouplement suivant l'une des revendications précédentes,
**caractérisée en ce que** la partie (3) de rigidification est plus longue à l'extrémité (11) inférieure que le joint (2) en caoutchouc entourant la partie (3) de rigidification, la partie (3) de rigidification s'appliquant au piston (1) par l'extrémité (11) inférieure.

6. Tête d'accouplement suivant l'une des revendications précédentes,
**caractérisée en ce que** la partie (3) de rigidification a, le long du pourtour intérieur, au moins un nervurage (13) linéaire, le au moins un nervurage (13) linéaire étant constitué jusqu'à un nervurage (10) radial de la partie (13) de rigidification et s'y terminant, de manière à créer, sur le pourtour intérieur de la partie (3) de rigidification, une région lisse au niveau du nervurage (10) radial.
